# EUROPÄISCHE PATENTSCHRIFT

(11) **EP 2 444 341 B1**
(45) Veröffentlichungstag und Bekanntmachung des Hinweises auf die Patenterteilung: **18.12.2013**
(21) Anmeldenummer: 11154522.4
(22) Anmeldetag: 15.02.2011
(51) Int. Cl.: B65G 67/08

(54) **Vorrichtung zum Behandeln von Stückgütern einer Transporteinheit, insbesondere eines Wechselbehälters, und Entladevorrichtung**
Device for treating piece goods of a transport unit, particularly a swappable container and unloading device
Dispositif de traitement de produits en vrac d'une unité de transport, notamment d'un conteneur interchangeable et dispositif de déchargement

(30) Priorität: 20.10.2010 DE 102010042705
(43) Veröffentlichungstag der Anmeldung: 25.04.2012
(73) Patentinhaber: Siemens Aktiengesellschaft, 80333 München (DE)
(72) Erfinder: Enenkel, Peter, 78462 Konstanz (DE)

(56) Entgegenhaltungen:
- WO-A1-98/54073
- WO-A1-2005/092706
- WO-A1-2006/117003
- DE-A1-102008 036 721

## Beschreibung

Die Erfindung betrifft eine Vorrichtung zum Behandeln von Stückgütern einer Transporteinheit nach dem Oberbegriff des Anspruchs 1 sowie eine Entladevorrichtung zum Entladen einer Transporteinheit zum Transport von Strückgütern nach dem Oberbegriff des Anspruchs 14, wie sie aus der DE 10 2008 036 721 A1 bekannt sind.

Der Transport von Stückgütern, insbesondere in der Form von stapelbaren Versandeinheiten, wie Pakete, Säcke, Verpackungen, palettierten Produkten usw. erfolgt heutzutage überwiegend mit Hilfe von genormten Transporteinheiten, die vorzugsweise auf der Straße oder per Bahn gefördert werden. Diese Transporteinheiten sind hierbei typischerweise als austauschbare Anhänger ausgebildet, die in der fachmännischen Sprache unter dem Begriff "Wechselbehälter" oder "Wechselbrücke" bezeichnet werden.

Obwohl die Sortierung der transportierten Stückgüter in Sortierzentren durch ständige Weiterentwicklungen optimiert wird, stellt die manuelle Entladung der Transporteinheiten an den Eingangstoren derartiger Sortier- oder Distributionszentren weiterhin einen Engpass dar, der einen nicht unerheblichen Einfluss auf die Distribution der Versandeinheiten hat.

Durch die manuelle Beladung inhomogener Stückgüter in den Transporteinheiten entstehen Stapel von Stückgütern mit einem stark ungleichmäßigen Stapelbild. Die Entladung kann daher auch nur manuell erfolgen. Die Behandlung derartiger inhomogener Ladungen kann mit der Behandlung von Schüttgut verglichen werden. Es ist bei der Entladung solcher Ladungen üblich, dass die zum Teil chaotisch gestapelten Waren zusammenstürzen und von einer Bedienperson mühsam wieder aufgesammelt und auf einen Förderer geordnet abgelegt werden. Es ist bekannt, einen Teleskopförderer in die Transporteinheit einzuführen, wobei eine Bedienperson die Stückgüter manuell, einzeln und geordnet auf den Förderer ablegt.

Vorrichtungen aus dem Stand der Technik zum Be- und Entladen von Stückgütern, beispielsweise Gepäckstücken, sind in der WO 98/54073 A1, WO 2006/117003 A1 und WO 2005/092706 A1 beschrieben. In der DE 10 2008 036 721 A1 ist eine Fördereinrichtung für Stückgüter offenbart, die eine Arbeitsbühne am freien Förderende der Fördereinrichtung zeigt.

Der Erfindung liegt die Aufgabe zugrunde, eine gattungsgemäße Vorrichtung bereitzustellen, mittels welcher das Abführen von Stückgütern aus der Transporteinheit heraus bei der Entladung inhomogen bzw. ungeordnet gestapelter Stückgüter mit einem geringen Arbeitsaufwand erfolgen kann.

Hierzu wird vorgeschlagen, dass die Vorrichtung zum Behandeln von Stückgütern nach Anspruch 1 ausgeführt ist.

Hierdurch können Stückgüter, die aufgrund eines ungleichmäßigen Stapelbilds und/oder eines durch die Bedienperson geführten Stürzens vom Stückgutstapel herunterfallen, direkt vom Bodenförderer gesammelt und weiter gefördert werden. Ein Handhaben der heruntergefallenen Stückgüter durch die Bedienperson, insbesondere ein mühsames Heben der Stückgüter und deren Ablegen auf die Fördereinheit können hierbei vorteilhaft vermieden werden. Unter einem "geführten" Stürzen von Stückgütern soll ein Stürzen verstanden werden, welches durch eine absichtliche bzw. kontrollierte Handhabung der Stückgüter im Stückgutstapel durch die Bedienperson, insbesondere mittels eines Werkzeugs hervorgerufen ist.

Der Bedienkomfort für die Bedienperson ist dadurch gesteigert, dass die Fördereinheit eine Arbeitsplattform aufweist, die dazu vorgesehen ist, von der Bedienperson begangen zu werden.

Dadurch, dass der Bodenförderer derart ausgebildet, insbesondere derart dimensioniert ist, dass die Stückgüter in loser Anordnung gefördert werden können, kann ferner auf ein zeitaufwendiges geordnetes Ablegen der Stückgüter verzichtet werden. Auf den Bodenförderer gestürzte Stückgüter können hiermit ohne Handhabung durch die Bedienperson pulkartig von einer Fördertechnik des Bodenförderers weiter gefördert werden. Somit kann der Entladedurchsatz der Transporteinheit gesteigert werden, wodurch die nachteilhaften Wirkungen eines Engpasses an der Entladestelle eines Sortier- oder Distributionszentrums vermindert werden können. Ist die Transporteinheit länglich ausgebildet entspricht die Entladerichtung zweckmäßigerweise der Längsrichtung der Transporteinheit.

Unter einem "Bodenförderer" soll insbesondere ein eine Förderebene bildender Förderer verstanden werden, die zumindest bei einem Entladevorgang in der Transporteinheit im Bodenbereich der Transporteinheit angeordnet ist. Hierbei soll eine Ebene verstanden werden, die zumindest beim Entladevorgang in der Transporteinheit zumindest auf einer dem Stückgutstapel zugewandten Seite eine Höhe zum Boden von maximal 40 cm, vorzugsweise maximal 30 cm und besonders bevorzugt maximal 20 cm aufweist. Besonders vorteilhaft ist die Förderebene zumindest beim Entladevorgang relativ zum Boden der Transporteinheit maximal in Fußhöhe der Bedienperson angeordnet. Die Förderebene ist bevorzugt horizontal, d.h. parallel zum Boden ausgerichtet, sie kann aber in Entladerichtung eine Neigung nach oben aufweisen.

Die Vorrichtung weist vorzugsweise eine mit der mobilen Fördereinheit fördertechnisch verbundene Fördereinrichtung auf, die zumindest teilweise fest auf einem Boden angeordnet ist und dazu dient, die aus der Transporteinheit mittels der Fördereinheit heraus transportierten Stückgüter für eine weitere Verarbeitung zu einer Verarbeitungsanlage, wie z.B. einer Sortieranlage zu fördern. Die mobile Fördereinheit ist vorteilhafterweise zum Einfahren in eine an ein Sortier-und/oder Distributionszentrum angedockte Transporteinheit relativ zum festen Teil der Fördereinrichtung beweglich ausgebildet, der insbesondere innerhalb des Sortier- und/oder Distributionszentrums fest angeordnet ist. Die Fördereinrichtung bildet eine Förderebene, wobei die von dem Bodenförderer gebildete Förderebene zumindest bei einem Entladevorgang in der Transporteinheit aufgrund seiner Anordnung im Bodenbereich der Transporteinheit vorzugsweise tiefer als die Förderebene der festen Fördereinrichtung angeordnet ist. Der Höhenunterschied zwischen den Förderebenen kann mittels einer schrägen Förderebene überwunden werden.

Die Fördereinrichtung weist ferner vorteilhafterweise einen beweglichen Teil auf, der sich an die mobile Fördereinheit anschließt. Dies kann konstruktiv einfach erreicht werden, indem die Fördereinrichtung als teleskopische Einrichtung ausgebildet ist. Die Fördereinrichtung kann außerdem dazu dienen, die Bewegung der mobilen Fördereinheit anzutreiben. Alternativ oder zusätzlich kann die mobile Fördereinheit eine eigene Antriebseinheit aufweisen.

Die mobile Fördereinheit, insbesondere der Bodenförderer, ist zweckmäßigerweise mit einem Fahrwerk versehen, das ein Fahren derselben auf einem Boden, insbesondere auf dem Boden der Transporteinheit ermöglicht. Insbesondere weist das Fahrwerk einen Satz von Rädern und/oder Rollen auf, mittels dessen die Fördereinheit, insbesondere der Bodenförderer, auf dem Boden rollen kann.

Durch die Beweglichkeit der mobilen Fördereinheit kann der Bodenförderer abhängig vom Fortschritt des Entladevorgangs in Richtung auf den Stückgutstapel gefahren werden, so dass die Förderebene des Bodenförderers vorteilhaft stets am Fuß des Stückgutstapels angeordnet sein kann. Hierbei kann ein hoher Bedienkomfort erreicht werden, wenn die Fördereinheit eine Bedienvorrichtung aufweist, die zu einer Betätigung einer Bewegung zumindest des Bodenförderers durch die Bedienperson vorgesehen ist.

Um eine besonders hohe Auffangrate von herunterfallenden Stückgütern durch den Bodenförderer zu erreichen, wird vorgeschlagen, dass der Bodenförderer eine Förderebene bildet, die derart dimensioniert ist, dass sie sich senkrecht zur Entladerichtung um zumindest einen wesentlichen Teil der Breite der als genormter Behälter ausgebildeten Transporteinheit erstreckt. Unter der "Breite" einer Einheit soll insbesondere die horizontale Erstreckung der Einheit senkrecht zur Entladerichtung verstanden werden. Unter einem "wesentlichen" Teil der Breite soll insbesondere zumindest 50%, vorteilhaft zumindest 75% und bevorzugt zumindest 90% der Breite der Transporteinheit porteinheit verstanden werden. Die Transporteinheit ist vorzugsweise als ein genormter Wechselbehälter ausgebildet, der in Bezug auf den Straßen- und/oder Schienenverkehr vorschriftgemäß dimensioniert ist. Insbesondere kann die Transporteinheit als eine nach der Norm "EN 284" dimensionierte Transporteinheit ausgeführt sein.

In einer bevorzugten Ausgestaltung der Erfindung wird vorgeschlagen, dass die Vorrichtung eine Werkzeugeinheit aufweist, die dazu vorgesehen ist, von der Bedienperson zu einem geführten Stürzen von Stückgütern vom Stückgutsstapel bedient zu werden. Hierdurch können ein schnelles Entladen der Transporteinheit und ein hoher Arbeitskomfort der Bedienperson erreicht werden.

In diesem Zusammenhang wird vorgeschlagen, dass die Werkzeugeinheit an der Fördereinheit gehaltert ist. Hierdurch kann der Arbeitskomfort der Bedienperson konstruktiv einfach und platzsparend gesteigert werden.

In diesem Zusammenhang wird vorgeschlagen, dass die Fördereinheit für einen Entladevorgang in einer Einfahrrichtung in die Transporteinheit hinein gefahren wird und die Arbeitsplattform bezüglich der Einfahrrichtung am frontseitigen Ende der Fördereinheit angeordnet ist. Hierdurch kann auf einen Platz für die Bedienperson neben oder vor der Fördereinheit verzichtet werden, wobei die vom Bodenförderer gebildete Förderebene in der Breite groß dimensioniert sein kann und/oder die Fördereinheit direkt bis an den Fuß des Stückgutstapels an diesen angrenzend gefahren werden kann. Die Arbeitsplattform in dieser Ausführung ist vorteilhafterweise - in Entladerichtung betrachtet - vor der Förderebene angeordnet. Mit einer derartigen Ausführung der Arbeitsplattform kann die Be-dienperson - zwischen dem Stückgutstapel und dem Bodenförderer stehend - mit einer geringen Entfernung zum Stückgutstapel und zum Bodenförderer ihre Aufgabe erledigen und es können kurze Stürzstrecken der Stückgüter von ihrer Position im Stückgutstapel bis zum Bodenförderer erreicht werden.

Es wird außerdem vorgeschlagen, dass der Bodenförderer eine Förderebene bildet und sich die Arbeitsplattform senkrecht zur Entladerichtung um zumindest einen wesentlichen Teil der Breite der Förderebene erstreckt. Hierdurch kann eine vorteilhafte Bewegungsfreiheit der Bedienperson relativ zur Förderebene erreicht werden, wobei ein Entstapeln der Stückgüter besonders effizient erfolgen kann. Um eine optimale Bewegungsfreiheit relativ zur Förderebene zu erreichen, wird vorgeschlagen, dass sich die Arbeitsplattform wenigstens um die Breite der Förderebene erstreckt. Besonders bevorzugt erstreckt sich die Arbeitsplattform senkrecht zur Entladerichtung um zumindest einen wesentlichen Teil der Breite der Transporteinheit.

In einer weiteren Ausführung der Erfindung wird vorgeschlagen, dass der Bodenförderer einen Satz von Fördermitteln aufweist, wobei zumindest zwei Fördermittel jeweils eine unterschiedliche Förderrichtung aufweisen. Dadurch kann, bereits innerhalb der Transporteinheit, eine Verdichtung des pulkartigen Materialflusses erfolgen, wobei eine sich an die mobile Fördereinheit anschließende Fördertechnik außerhalb der Transporteinheit mit einer geringeren Breite senkrecht zur Richtung des Materialflusses als die Breite der vom Bodenförderer gebildeten Förderebene ausgeführt werden kann. Die unterschiedlichen Förderrichtungen des Bodenförderers können der Entladerichtung und - zur Verdichtung des Materialflusses - einer Richtung entsprechen, die dazu tendiert, am Rand des Bodenförderers gestürzte Stückgüter in Richtung auf die Mitte des Bodenförderers zu zu bewegen.

Die Vorrichtung weist in einer bevorzugten Ausführung der Erfindung eine Vereinzelungseinrichtung zum Vereinzeln der aus der Transporteinheit entladenen Stückgüter auf, die mit der Fördereinheit fördertechnisch verbunden ist, wodurch der Materialfluss zum Zweck einer Sortierung effizient vorbereitet werden kann. Unter einem "Vereinzeln" der Stückgüter soll insbesondere ein Behandlungsvorgang des Materialflusses verstanden werden, wobei nach Erledigung dieses Behandlungsvorgangs der Materialfluss aus in Reihe hintereinander angeordneten Stückgütern besteht.

Eine schonende Behandlung der Stückgüter kann ferner erreicht werden, wenn die Fördereinheit eine Dämpfungseinheit aufweist, die dazu vorgesehen ist, ein Stürzen der Stückgüter auf den Bodenförderer zu dämpfen.

In einer weiteren Ausgestaltung der Erfindung wird vorgeschlagen, dass die Fördereinheit eine Rutsche aufweist, die dazu dient, vom Stückgutstapel herunterfallende Stückgüter auf den Bodenförderer zu führen.

Die Erfindung geht ferner aus von einer Entladevorrichtung zum Entladen einer Transporteinheit zum Transport von Stückgütern, mit einer Fördereinheit, die zum Fördern der Stückgüter in einer Entladerichtung aus der Transporteinheit heraus vorgesehen ist und zumindest eine Förderebene aufweist.

Die oben erörterte Aufgabe wird mit der Entladevorrichtung nach dem Anspruch 14 gelöst.

Hierdurch kann bei einer losen Entladung der Transporteinheit, bei welcher in der Transporteinheit gestapelte Stückgüter von einem Stapel herunterfallen bzw. von einer Bedienperson heruntergestürzt werden, ein besonders gutschonender Entladevorgang erreicht werden, da die Fallhöhe von im obersten Bereich des Stapels angeordneten Stückgütern durch dessen Auffangen vermindert werden kann.

In diesem Zusammenhang soll unter einer "Auffangeinrichtung" eine Einrichtung verstanden werden, die dazu vorgesehen ist, ein freies Fallen von einem Stückgutstapel herunterfallender Stückgüter zu unterbrechen und diese umzuleiten, bevor sie auf die tiefer gelegene Förderebene oder auf den Boden der Transporteinheit gelangen. Durch einen Auffangbereich, der höher als die Förderebene angeordnet ist, kann ein Stürzen der aufgefangenen Stückgüter auf die Förderebene oder auf den Boden der Transporteinheit verhindert werden. Die Begriffe "Höhe, höher" usw. beziehen sich auf die vertikale Richtung, wobei eine Höhe insbesondere relativ zum Boden der Transporteinheit definiert werden kann.

Ferner wird vorgeschlagen, dass die Auffangeinrichtung um zumindest eine Drehachse schwenkbar ist. Es können dadurch vorteilhafte Klappbewegungen der Auffangeinrichtung erreicht werden, durch welche der Einsatz der Auffangeinrichtung bei einem Entladevorgang flexibler gestaltet werden kann. Beispielsweise kann durch ein Schwenken der Auffangeinrichtung diese von einer Arbeitsposition in eine Position bewegt werden, in welcher sie keine Funktion im Entladevorgang hat, wie z.B. eine Stauposition.

In einer bevorzugten Ausbildung der Erfindung wird vorgeschlagen, dass die Fördereinheit als mobile Fördereinheit ausgebildet ist, die zu einem Entladevorgang in die Transporteinheit hinein gefahren wird. Hierdurch kann die Förderebene vorteilhaft bei Bedarf möglichst nah an den Stückgutstapel herangefahren werden. Die Fördereinheit wird vorzugsweise linear entgegen der Entladerichtung in Richtung des Stückgutstapels verschoben.

Außerdem wird vorgeschlagen, dass die Fördereinheit einen die Förderebene bildenden Bodenförderer aufweist, der von einem Stückgutstapel gestürzte Stückgüter in loser Anordnung fördert. Hierdurch können Stückgüter, die im Stückgutstapel niedriger als der Auffangbereich angeordnet sind und aufgrund eines ungleichmäßigen Stapelbilds und/oder eines durch eine Bedienperson geführten Stürzens vom Stückgutstapel herunterfallen, direkt vom Bodenförderer gesammelt und weiter gefördert werden. Ein Handhaben der heruntergefallenen Stückgüter durch die Bedienperson, insbesondere ein mühsames Heben der Stückgüter und deren Ablegen auf die Fördereinheit können hierbei vorteilhaft vermieden werden. Dadurch, dass der Bodenförderer derart ausgebildet, insbesondere derart dimensio-niert ist, dass die Stückgüter in loser Anordnung gefördert werden können, kann ferner auf ein zeitaufwendiges geordnetes Ablegen der Stückgüter verzichtet werden. Auf den Bodenförderer gestürzte Stückgüter können hiermit ohne Handhabung durch die Bedienperson pulkartig von einer Fördertechnik des Bodenförderers weiter gefördert werden. Somit kann der Entladedurchsatz der Transporteinheit gesteigert werden, wodurch die nachteilhaften Wirkungen eines Engpasses an der Entladestelle eines Sortier- oder Distributionszentrums vermindert werden können. Ist die Transporteinheit länglich ausgebildet, entspricht die Entladerichtung zweckmäßigerweise der Längsrichtung der Transporteinheit.

Unter einem "Bodenförderer" soll insbesondere ein eine Förderebene bildender Förderer verstanden werden, die zumindest bei einem Entladevorgang in der Transporteinheit im Bodenbereich der Transporteinheit angeordnet ist. Hierbei soll eine Ebene verstanden werden, die zumindest beim Entladevorgang in der Transporteinheit zumindest auf einer dem Stückgutstapel zugewandten Seite eine Höhe zum Boden von maximal 40 cm, vorzugsweise maximal 30 cm und besonders bevorzugt maximal 20 cm aufweist. Besonders vorteilhaft ist die Förderebene zumindest beim Entladevorgang relativ zum Boden der Transporteinheit maximal in Fußhöhe der Bedienperson angeordnet. Die Förderebene ist bevorzugt horizontal, d.h. parallel zum Boden ausgerichtet, sie kann aber in Entladerichtung eine Neigung nach oben aufweisen.

Es kann ferner eine konstruktiv einfache Ausgestaltung der Entladevorrichtung erreicht werden, wenn die Fördereinheit und die Auffangeinrichtung eine zusammenhängende Einheit bilden. Hierbei weist die Entladevorrichtung zweckmäßigerweise einen Grundkörper auf, der die Fördereinheit mit der Auffangeinrichtung verbindet. Insbesondere sind die Fördereinheit und die Auffangeinrichtung am Grundkörper gelagert. Ist die Fördereinheit wie oben beschrieben als mobile Fördereinheit ausgebildet, bewirkt eine Bewegung des Grundkörpers relativ zur Transporteinheit vorteilhaft gleichzeitig eine Bewegung der Förderebene und der Auffangeinrichtung. Der Grundkörper kann vorteilhaft Wandteile aufweisen, die eine seitliche Begrenzung der Förderebene bilden und ein seitliches Fallen geförderter Stückgüter auf den Boden der Transporteinheit verhindern, wobei die Auffangeinrichtung vorteilhaft an einem Wandteil gelagert sein kann.

Des Weiteren wird vorgeschlagen, dass der Auffangbereich zumindest in einer Arbeitsposition der Auffangeinrichtung oberhalb der Förderebene angeordnet ist. Hierdurch kann im eventuellen Fall, dass ein aufgefangenes Stückgut von der Auffangeinrichtung herunterfällt, dieses Stückgut direkt auf die darunter gelegene Förderebene gelangen und von dort weiter in Entladerichtung gefördert werden, ohne dass ein Handhaben des Stückguts durch eine Bedienperson notwendig ist. Unter einer Anordnung"oberhalb" der Förderebene soll insbesondere verstanden werden, dass eine Projektion des Auffangbereichs entlang der vertikalen Richtung nach unten in die Förderebene möglich ist.

In einer weiteren Ausführung der Erfindung wird vorgeschlagen, dass die Auffangeinrichtung zumindest einen Führungsbereich aufweist, der dazu dient, aufgefangene Stückgüter auf die Förderebene zu führen. Hierdurch können aufgefangene Stückgüter schnell und für die Güter schonend auf die Förderebene gelangen, die sie dann in Entladerichtung aus der Transporteinheit heraus bewegt.

In diesem Zusammenhang wird der Führungsbereich zweckmäßigerweise von einer Führungseinrichtung gebildet, durch welche die Stückgüter von selbst auf die Förderebene gelangen. Insbesondere wird vorgeschlagen, dass der Führungsbereich zu einem Gleiten der aufgefangenen Stückgüter vorgesehen ist, wodurch die Stückgüter durch ihre eigene Gewichtskraft angetrieben auf die Förderebene gelangen und eine besonders konstruktiv einfache Ausgestaltung des Führungsbereichs, insbesondere als Rutsche, erreicht werden kann.

Um eine besonders hohe Flexibilität im Einsatz der Entladevorrichtung zu erreichen, ist die Auffangeinrichtung relativ zur Fördereinheit beweglich gelagert. Die Beweglichkeit kann relativ zu einem Grundkörper der Entladevorrichtung definiert werden, an welchem die Fördereinheit gelagert ist. In diesem Zusammenhang können Bauraum, Bauteile und Montageaufwand eingespart werden, wenn die Auffangeinrichtung am Grundkörper beweglich gelagert ist.

Ferner ist die Auffangeinrichtung zumindest parallel zur Entladerichtung linear verschiebbar. Dadurch kann die Auffangeinrichtung relativ zur Fördereinheit jederzeit entgegen der Entladerichtung in eine Arbeitsposition an den zu behandelnden Stückgutstapel herangeschoben werden. Ebenfalls kann sie bei Bedarf vorteilhafterweise von einer Bedienperson vom Stückgutstapel in Entladerichtung wieder entfernt werden, um dadurch der Bedienperson einen Zugang zu einer Stelle freizumachen, an welcher ein Handlungsbedarf besteht. Dies ermöglicht insbesondere ein komfortables Behandeln von Stückgütern der unteren Stapelschicht, die niedriger als der Auffangbereich angeordnet sind.

Ein besonders einfaches Betätigen der Auffangeinrichtung kann erreicht werden, wenn die Entladevorrichtung eine Führungseinheit aufweist, die dazu vorgesehen ist, die Auffangeinrichtung parallel zur Entladerichtung zu führen.

Eine besonders konstruktiv einfache Ausgestaltung der Entladevorrichtung sieht vor, dass die Auffangeinrichtung zumindest einen Kontaktkörper aufweist, durch welchen die Auffangeinrichtung in Kontakt mit der Förderebene ist. Der Kontaktkörper dient vorzugsweise als eine bewegliche Stützung der Auffangeinrichtung auf der Förderebene und kann hierbei insbesondere als Roll- und/oder Gleitkörper ausgebildet sein. Dadurch kann mit einem besonders geringen Konstruktionsaufwand eine stabile, bewegliche Lagerung der Auffangeinrichtung an der Fördereinheit erreicht werden.

Ferner wird vorgeschlagen, dass die Auffangeinrichtung eine Dämpfungseinheit aufweist. Diese dient vorteilhafterweise dazu, einen beim Auffangen eines Stückguts verursachten Stoß zu dämpfen. Dies kann einfach dadurch erreicht werden, dass die Auffangeinrichtung in zumindest einem Bereich aus einem Material hergestellt ist, das zur Stoßdämpfung vorgesehen ist. Alternativ oder zusätzlich kann die Auffangeinrichtung an zumindest einer Lagerstelle mit einer Dämpfungseinheit versehen sein.

Ausführungsbeispiele der Erfindung sind in den Zeichnungen dargestellt und werden nachfolgend beschrieben. Es zeigen:
- Figur 1: eine Seitenansicht eines LKWs mit einem an einem Distributionszentrum angedockten Anhänger, in welchen eine mobile Fördereinheit gefahren wurde,
- Figur 2: die Anordnung der Figur 1 in einer Ansicht von oben,
- Figur 3: eine perspektivische Ansicht der Fördereinheit,
- Figur 4: eine Seitenansicht der Fördereinheit,
- Figur 5: eine Seitenansicht einer alternativen Fördereinheit,
- Figur 6: eine Seitenansicht eines LKWs mit einem an einem Distributionszentrum angedockten Anhänger, in welchen eine mobile Entladevorrichtung gefahren wurde,
- Figur 7: die Entladevorrichtung mit zwei Auffangeinrichtungen, in einer perspektivischen Ansicht,
- Figur 8: eine Seitenansicht der Entladevorrichtung mit einer Auffangeinrichtung in einer Arbeitsposition und
- Figur 9: die Ansicht aus Figur 8 mit der Auffangeinrichtung in einer passiven Position.

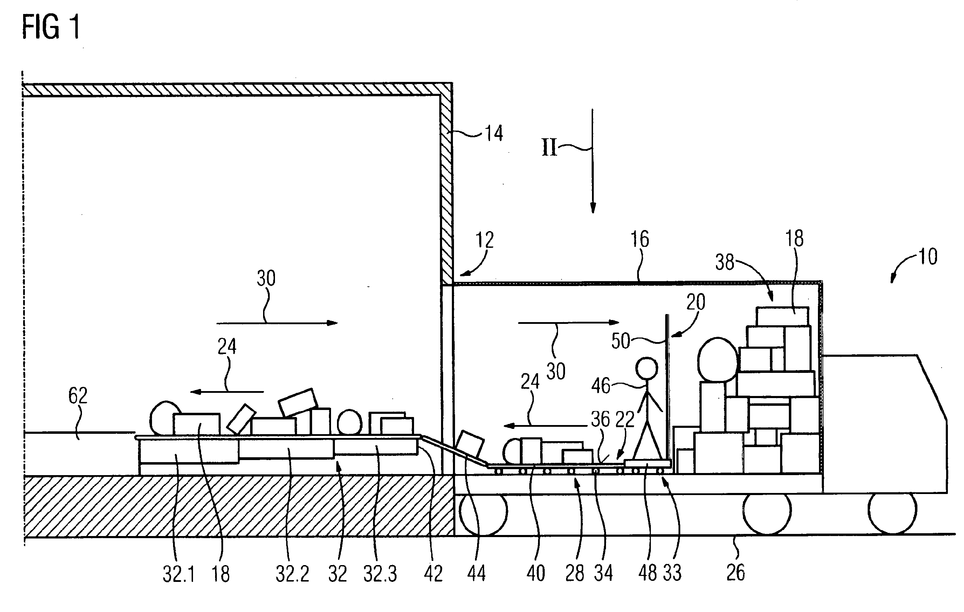

Figur 1 zeigt in einer schematischen Seitenansicht ein LKW 10, der zum Zweck der Entladung der darin transportierten Waren an einem Tor 12 eines Gebäudes 14, z.B. eines Distributionszentrums, angedockt ist. Als Anhänger des LKWs ist eine Transporteinheit 16 dargestellt, die als ein genormter, austauschbarer Wechselbehälter (in der fachmännischen Sprache auch Wechselbrücke oder WAB genannt) ausgebildet ist. Beispielsweise ist die Transporteinheit 16 nach der europäischen Norm EN 284 ausgelegt. Die transportierten Waren entsprechen Stückgütern 18, und zwar insbesondere Versandeinheiten wie Pakete, Säcke, Verpackungen, palettierte Produkte usw.

Zum Behandeln, insbesondere zum Entladen der in der Transporteinheit 16 gestapelten Stückgüter 18 ist eine Vorrichtung 20 vorgesehen, die mit einer Fördereinheit 22 zum Fördern der Stückgüter 18 aus der Transporteinheit 16 heraus und in das Gebäude 14 hinein versehen ist. Die Entladung erfolgt in einer Entladerichtung 24, die horizontal, d.h. parallel zum Boden 26, ausgerichtet ist und vorzugsweise der Längserstreckung der Transporteinheit 16 entspricht. Die Entladerichtung 24 ist senkrecht zur Frontseite des Gebäudes 14 ausgerichtet. Die Fördereinheit 22 ist als mobile Einheit ausgebildet, die zu einer Bewegung relativ zum Boden 26 und zum Boden des Gebäudes 14 angetrieben werden kann. Sie weist einen Bodenförderer 28 auf, der für einen Entladevorgang in die am Gebäude 14 angedockte Transporteinheit 16 hinein in einer Einfahrrichtung 30 gefahren wird und nach erledigter Entladung der Transporteinheit 16 aus der Transporteinheit 16 heraus gefahren wird. Die Einfahrrichtung 30 ist horizontal und entgegen der Entladerichtung 24 ausgerichtet. Es ist ferner im Gebäude 14 eine Fördereinrichtung 32 vorgesehen, die mit der mobilen Fördereinheit 22 fördertechnisch verbunden ist und die aus der Transporteinheit 16 entladenen Stückgüter 18 weiter in das Gebäude 14 fördern. Die Fördereinrichtung 32 ist als teleskopische Einrichtung mit Förderelementen 32.1, 32.2, 32.3 ausgebildet, die ineinander greifen, wobei die Bewegung der teleskopischen Förderelemente 32.1, 32.2, 32.3 mit einer Bewegung des Bodenförderers 28 in Einfahrrichtung 30 gekoppelt ist. Die Fördereinrichtung 32 fördert den Bodenförderer 28 aus dem Gebäude 14 heraus in die Transporteinheit 16 hinein, wobei der Bodenförderer 28 mit einem Fahrwerk 33 aus Wälzkörpern 34, z.B. Rädern, versehen ist, die auf dem Boden der Transporteinheit 16 rollen.

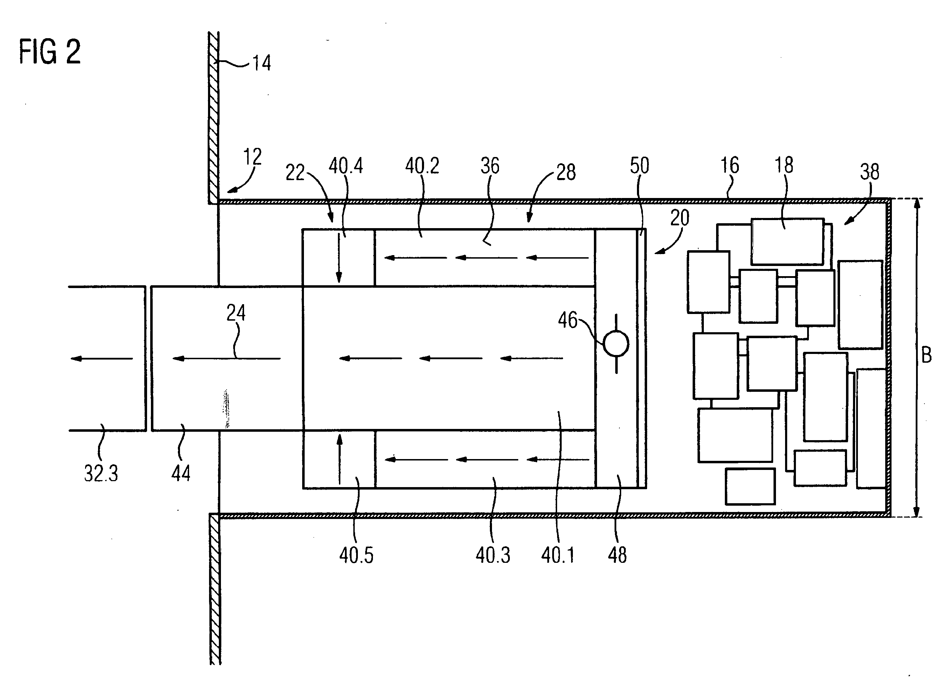

Der Bodenförderer 28 bildet eine Förderebene 36, mittels welcher die von einem Stückgutstapel 38 in der Transporteinheit 16 gestürzten Stückgüter 18 in Entladerichtung 24 gefördert werden. Die Förderebene 36, die im betrachteten Beispiel horizontal ausgerichtet ist, ist hierzu von zumindest einem Fördermittel 40 des Bodenförderers 28 gebildet, wie unten anhand der Figur 2 beschrieben. Die Förderebene 36 ist im eingefahrenen Zustand des Bodenförderers 28 im Bodenbereich der Transporteinheit 16 angeordnet. Die Fördereinheit 22 ist hierzu speziell ausgelegt, indem ihr die Förderebene 36 aufweisender Bodenförderer 28 tiefer als im Gebäude 14 angeordnete Fördereinrichtung 32 angeordnet ist. Die Fördereinrichtung 32 weist hierbei ein bewegliches Ende 42 auf, das mittels eines - in Einfahrrichtung 30 betrachtet - nach unten geneigten Förderelements 44 mit der Förderebene 36 fördertechnisch verbunden ist.

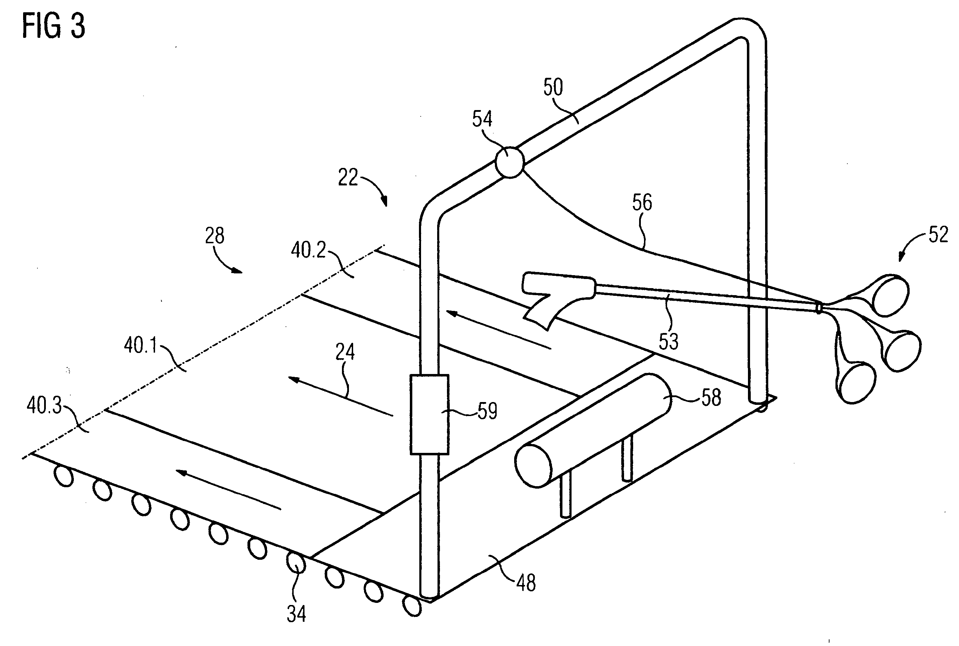

In einem Entladevorgang gelangen die in der Transporteinheit 16 gestapelten Stückgüter 18 auf die Fördereinheit 22, und zwar auf deren Förderebene 36. Aufgrund der bodennahen Anordnung der Förderebene 36 ist diese stets maximal in Fußhöhe einer Bedienperson 46 angeordnet. Hiermit können die gestapelten Stückgüter 18 von der Bedienperson 46 derart gehandhabt werden, dass sie einfach vom Stapel 18 direkt auf die Förderebene 36 stürzen. Die Handhabung kann hierbei geführt mittels eines Werkzeugs (siehe Figur 3) erfolgen.

Der Bodenförderer 28 der Fördereinheit 22 weist ferner an seinem - in Einfahrrichtung 30 betrachtet - frontseitigen Ende einen Bereich auf, der dazu vorgesehen ist, von der Bedienperson 46 begangen zu werden. Der Bereich wird als begehbare Arbeitsplattform 48 genutzt, auf welcher die Bedienperson 46 beim Handhaben der Stückgüter 18 steht. An die Arbeitsplattform 48, die von einer Platte gebildet ist, schließt sich in Entladerichtung 24 die Förderebene 36 an, so dass sich die auf dem begehbaren Bereich stehende Bedienperson 46 bezüglich der Entladerichtung 24 zwischen den zu entladenden Stückgütern 18 und der Förderebene 36 befindet. Die Bedienperson 46 kann beim Einfahren des Bodenförderers 28 auf der Arbeitsplattform 48 stehen, so dass der Bodenförderer 28 bis direkt an den Fuß des Stapels 38 gefahren werden kann, wodurch ein kurze Stürzstrecke der Stückgüter 18 vom Stapel 38 zur Förderebene 36 erreicht wird. Die begehbare Arbeitsplattform 48, die horizontal ausgerichtet ist, ist mit der Förderebene 36 koplanar, oder sie kann, wie in der Figur dargestellt, geringfügig höher als die Förderebene 36 sein, so dass sie im eingefahrenen Zustand bodennah, d.h. im Bodenbereich der Transporteinheit 16 angeordnet ist.

Figur 2 zeigt die Transporteinheit 16 in einer Ansicht von oben, wobei sich der Bodenförderer 28 der Fördereinheit 22 in einem eingefahrenen Zustand befindet und an den Stapel 38 von Stückgütern 18 angrenzt. Die Transporteinheit 16 weist eine Breite B, d.h. eine horizontale Erstreckung senkrecht zur Entladerichtung 24, auf. Der Bodenförderer 28 ist derart dimensioniert, dass die Förderebene 36 in horizontaler Richtung senkrecht zur Entladerichtung 24 mehr als 50% der Breite B der Transporteinheit 16 spannt. Im betrachteten Beispiel spannt die Förderebene 36 ca. 80% der Breite B. Durch die tiefe und breite Ausgestaltung der Förderebene 36 ist ein geordnetes Ablegen der Stückgüter 18 auf die Förderebene 36 durch die Bedienperson 46 nicht notwendig. Die auf die Förderebene 36 gestürzten Stückgüter 18 können schnell und einfach pulkartig auf der Förderebene 36 transportiert werden, da sich der Bodenförderer 28 insbesondere aufgrund seiner Breite für den Transport der Stückgüter 18 in loser Anordnung eignet.

Die Breite des Materialflusses wird dadurch reduziert, bzw. eine Verdichtung des Materialflusses senkrecht zur Entladerichtung 24 kann dadurch erfolgen, dass die Förderebene 36 von einem Satz von Fördermitteln 40.1 bis 40.5 gebildet ist, wobei die Fördermittel 40 unterschiedliche Förderrichtungen aufweisen. Ausgehend von der begehbaren Arbeitsplattform 48 sind ein mittiges Fördermittel 40.1 und seitliche Fördermittel 40.2, 40.3 vorgesehen, die die Stückgüter 18 in die Entladerichtung 24 fördern. In Entladerichtung 24 schließt sich jeweils an ein seitliches Fördermittel 40.2, 40.3 ein weiteres seitliches Fördermittel 40.4 bzw. 40.5 an, dessen Förderrichtung senkrecht zur Entladerichtung 24 in Richtung des mittigen Fördermittels 40.1 zeigt. So können auf die Förderebene 36 seitlich gestürzte Stückgüter 18 auf das mittige Fördermittel 40.1 transportiert werden, das sich an das geneigte Förderelement 44 zum Transport in das Gebäude 14 anschließt. Im betrachteten Beispiel sind die Fördermittel 40 als Förderband ausgebildet.

Die das frontseitige Ende der Fördereinheit 22 bildende und sich zwischen der Förderebene 36 und den zu entladenden Stückgütern 18 befindende begehbare Arbeitsplattform 48 erstreckt sich in horizontaler Richtung senkrecht zur Entladerichtung 24 um die gesamte Breite der Förderebene 36, wodurch eine große Bewegungsfreiheit der Bedienperson 46 entlang der Förderebene 36 erreicht werden kann.

In Figur 3 ist eine perspektivische Ansicht des Bodenförderers 28 der Fördereinheit 22 dargestellt. Oberhalb der begehbaren Arbeitsplattform 48 ist eine mit dem Bodenförderer 28 feste Halteeinrichtung 50 angeordnet, die zum Halten einer Werkzeugeinheit 52 mit einem Handhabungswerkzeug 53 dient, das von der Bedienperson 46 zum Handhaben der Stückgüter 18, insbesondere zum geführten Stürzen der Stückgüter 18 aus dem Stückgutstapel 38 bedient werden kann. Die Halteeinrichtung 50, die an der Fördereinheit 22 befestigt und in der Form einer Brücke ausgeformt ist, weist eine Halterung 54 auf, an welcher ein am Handhabungswerkzeug 53 befestigtes, im betrachteten Ausführungsbeispiel als Draht ausgebildetes Haltemittel 56, senkrecht zur Entladerichtung 24 beweglich gehaltert ist.

Ferner ist der Bodenförderer 28 mit einer Dämpfungseinheit 58 versehen, die zu einer schonenden Handhabung der Stückgüter 18 ein Herunterfallen der Stückgüter 18 auf den Bodenförderer 28 dämpft. Die Dämpfungseinheit 58, die am vorderen Ende der Arbeitsplattform 48 fixiert ist, ist als ein sich senkrecht zur Entladerichtung 24 erstreckender Zylinder aus einem zur Schockabsorption vorgesehenen Material ausgebildet.

An der Halteeinrichtung 50 befestigt ist ferner eine Bedienvorrichtung 59 zu sehen, die von der Bedienperson 46 genutzt werden kann, um eine Bewegung des Bodenförderers 28 in Einfahrrichtung 30 oder in Entladerichtung 24 zu betätigen. Hierzu steht die Bedienvorrichtung 59 in Wirkverbindung mit einer nicht näher dargestellten Antriebseinheit, welche am Bodenförderer 28 montiert oder in der Fördereinrichtung 32 integriert ist und dazu dient, eine Bewegung des mobilen Bodenförderers 28 zu bewirken.

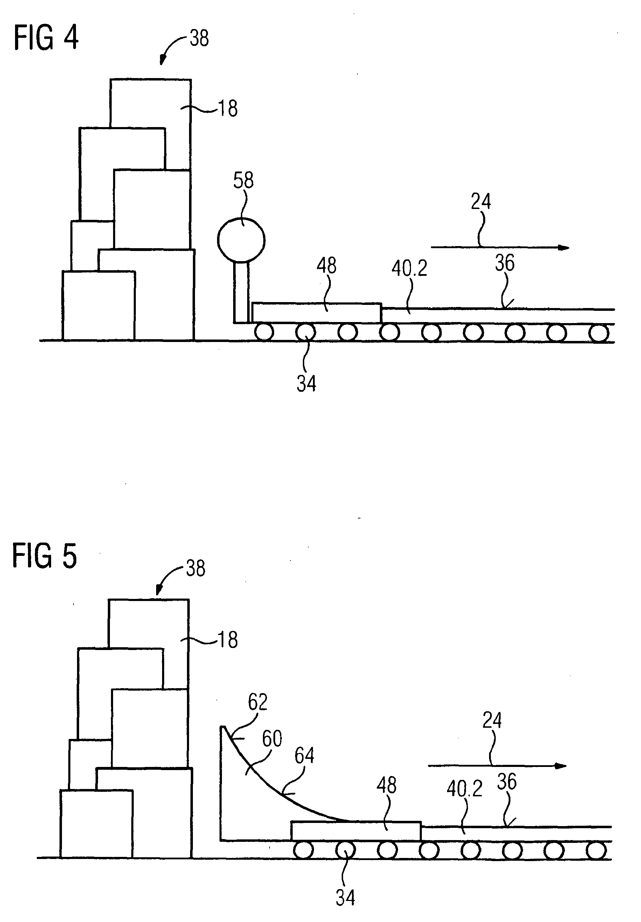

Die Anordnung der Dämpfungseinheit 58 ist in einer Seitenansicht in Figur 4 gezeigt, wobei auf die Darstellung der Halteeinrichtung 50 verzichtet wurde. Alternativ oder zusätzlich zur Dämpfungseinheit 58 kann eine als Rutsche ausgebildete Auffangeinrichtung 60 vorgesehen sein, die am vorderen Ende der Arbeitsplattform 48 fixiert ist und - in Entladerichtung 24 betrachtet - zwischen dem Stapel 36 von Stückgütern 18 und der Arbeitsplattform 48 angeordnet ist. Sie weist einen Auffangbereich 62 auf, der höher als die Förderebene 36 angeordnet ist. An den Auffangbereich 62 schließt sich insbesondere bündig einen Führungsbereich 64 an, der dazu dient, die vom Stapel 36 herunterfallenden Stückgüter 18 auf die Förderebene 36 zu führen, wie in Figur 5 dargestellt. Das Material des Führungsbereichs 64 ist derart gewählt, dass die durch den Auffangbereich 62 aufgefangenen Stückgüter 18 auf dem Führungsbereich 64 gleiten.

Wie oben schon erwähnt können die Stückgüter 18 aufgrund der tiefen, bodennahen Anordnung und der Breite der Förderebene 36 ordnungslos, pulkartig von der Fördereinheit 22 aus der Transporteinheit 16 heraus gefördert werden. Die Stückgüter 18 werden demnach ungeordnet in das Gebäude 14 gefördert, in dem sie weiter behandelt werden. Zum Zweck einer Sortierung, die hier nicht näher beschrieben wird, werden die Stückgüter 18 im ungeordneten Materialfluss vereinzelt. Dies erfolgt mittels einer Vereinzelungseinrichtung, die mit der Fördereinheit 22 fördertechnisch verbunden ist und in Bezug auf die Richtung des Materialflusses der Fördereinheit 22 nachgeschaltet ist (siehe Figur 1).

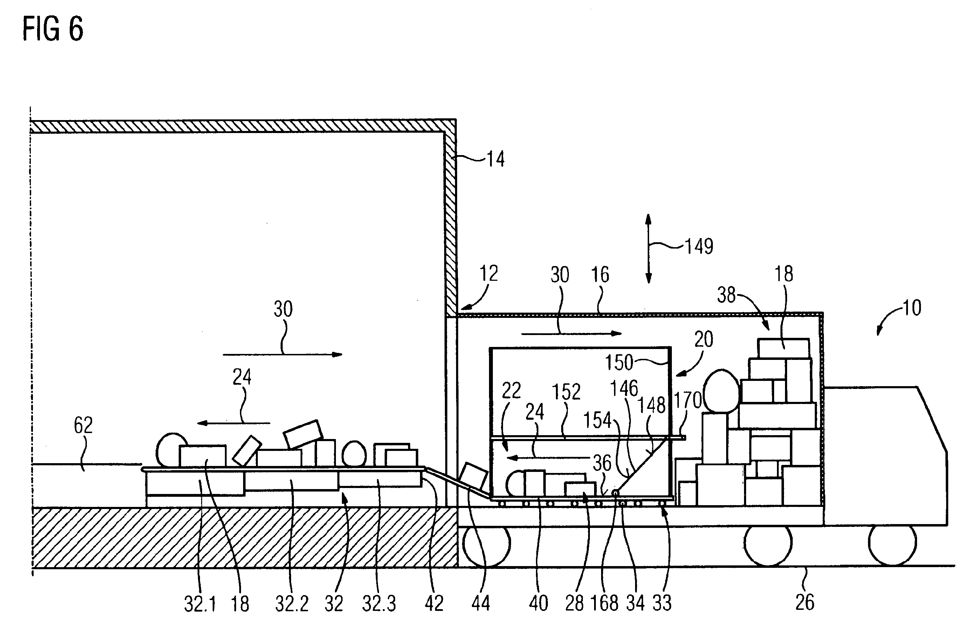

Die Figuren 6 bis 9 zeigen ein weiteres Ausführungsbeispiel. Um unnötige Wiederholungen zu vermeiden, werden der Aufbau und die Funktionen, deren obige Beschreibung auch für die unten erläuterte Ausführung gilt, nicht vollständig wiedergegeben. Hierzu wird auf die Beschreibung der Figuren 1 bis 5 verwiesen. Bauteile und Einheiten, die in den Ausführungsbeispielen eine gleiche Funktion aufweisen, werden mit dem gleichen Bezugszeichen bezeichnet.

Figur 6 zeigt in einer schematischen Seitenansicht ein LKW 10, der zum Zweck der Entladung der darin transportierten Waren an einem Tor 12 eines Gebäudes 14, z.B. eines Distributionszentrums, angedockt ist. Als Anhänger des LKWs ist eine Transporteinheit 16 dargestellt, die als ein genormter, austauschbarer Wechselbehälter (in der fachmännischen Sprache auch Wechselbrücke oder WAB genannt) ausgebildet ist. Beispielsweise ist die Transporteinheit 16 nach der europäischen Norm EN 284 ausgelegt. Die transportierten Waren entsprechen Stückgütern 18, und zwar insbesondere Versandeinheiten wie Pakete, Säcke, Verpackungen, palettierte Produkte usw.

Zum Entladen der in der Transporteinheit 16 gestapelten Stückgüter 18 ist eine Entladevorrichtung 20 vorgesehen, die mit einer Fördereinheit 22 zum Fördern der Stückgüter 18 aus der Transporteinheit 16 heraus und in das Gebäude 14 hinein versehen ist. Die Entladung erfolgt in einer Entladerichtung 24, die horizontal, d.h. parallel zum Boden 26, ausgerichtet ist und vorzugsweise der Längserstreckung der Transporteinheit 16 entspricht. Die Entladerichtung 24 ist senkrecht zur Frontseite des Gebäudes 14 ausgerichtet. Die Fördereinheit 22 ist als mobile Einheit ausgebildet, die zu einer Bewegung relativ zum Boden 26 und zum Boden des Gebäudes 14 angetrieben werden kann. Sie weist einen Bodenförderer 28 auf, der für einen Entladevorgang in die am Gebäude 14 angedockte Transporteinheit 16 hinein in einer Einfahrrichtung 30 gefahren wird und nach erledigter Entladung der Transporteinheit 16 aus der Transporteinheit 16 heraus gefahren wird. Die Einfahrrichtung 30 ist horizontal und entgegen der Entladerichtung 24 ausgerichtet. Es ist ferner im Gebäude 14 eine Fördereinrichtung 32 vorgesehen, die mit der mobilen Fördereinheit 22 fördertechnisch verbunden ist und die aus der Transporteinheit 16 entladenen Stückgüter 18 weiter in das Gebäude 14 fördern. Die Fördereinrichtung 32 ist als teleskopische Einrichtung mit Förderelementen 32.1, 32.2, 32.3 ausgebildet, die ineinander greifen, wobei die Bewegung der teleskopischen Förderelemente 32.1, 32.2, 32.3 mit einer Bewegung des Bodenförderers 28 in Einfahrrichtung 30 gekoppelt ist. Die Fördereinrichtung 32 fördert den Bodenförderer 28 aus dem Gebäude 14 heraus in die Transporteinheit 16 hinein, wobei der Bodenförderer 28 mit einem Fahrwerk 33 aus Wälzkörpern 34, z.B. Rädern, versehen ist, die auf dem Boden der Transporteinheit 16 rollen.

Der Bodenförderer 28 bildet eine Förderebene 36, mittels welcher die von einem Stückgutstapel 38 in der Transporteinheit 16 gestürzten Stückgüter 18 in Entladerichtung 24 gefördert werden. Die Förderebene 36, die im betrachteten Beispiel horizontal ausgerichtet ist, ist hierzu von zumindest einem Fördermittel 40 des Bodenförderers 28 gebildet. Die Förderebene 36 ist im eingefahrenen Zustand des Bodenförderers 28 im Bodenbereich der Transporteinheit 16 angeordnet. Die Fördereinheit 22 ist hierzu speziell ausgelegt, indem ihr die Förderebene 36 aufweisender Bodenförderer 28 tiefer als im Gebäude 14 angeordnete Fördereinrichtung 32 angeordnet ist. Die Fördereinrichtung 32 weist hierbei ein bewegliches Ende 42 auf, das mittels eines - in Einfahrrichtung 30 betrachtet - nach unten geneigten Förderelements 44 mit der Förderebene 36 fördertechnisch verbunden ist.

In einem Entladevorgang gelangen die in der Transporteinheit 16 gestapelten Stückgüter 18 auf die Fördereinheit 22, und zwar auf deren Förderebene 36. Aufgrund der bodennahen Anordnung der Förderebene 36 ist diese stets maximal in Fußhöhe einer Bedienperson (nicht dargestellt) angeordnet. Hiermit können die gestapelten Stückgüter 18 von der Bedienperson derart gehandhabt werden, dass sie einfach vom Stapel 18 direkt auf die Förderebene 36 stürzen. Die Handhabung kann hierbei geführt mittels eines Werkzeugs (nicht gezeigt) erfolgen.

Die Entladevorrichtung 20 weist ferner eine Auffangeinrichtung 146 auf, die zu einer schonenden Entladung von Stückgütern 18 dient, welche im obersten Bereich der Transporteinheit 16 gestapelt sind. Hierzu ist die Auffangeinrichtung 146 mit einem Auffangbereich 148 versehen, durch welchen diese Stückgüter 18 beim Herunterfallen vom Stapel 38 aufgefangen werden. Hierbei werden sie von einem freien Fall, bei welchem sie von einer beträchtlichen Höhe direkt auf die Förderebene 36 gelangen würden, umgeleitet (siehe auch Figur 3). Hierzu ist der Auffangbereich 148 - relativ zur vertikalen Richtung 149 und zum Boden der Transporteinheit 16 - höher angeordnet als die Förderebene 36. Durch die Auffangeinrichtung 146 wird die Strecke, die von einem Stückgut 18 im freien Fall zurückgelegt wird, gekürzt, vorteilhafterweise zumindest halbiert, wodurch eine besonders schonende Behandlung der Stückgüter 18 beim Entladevorgang erreicht werden kann.

Die Auffangeinrichtung 146 und die Fördereinheit 22 bilden eine zusammenhängende Einheit. Hierzu weist die Entladevorrichtung 20 einen starren Grundkörper 150 auf, an welchem die Fördereinheit 22 befestigt ist. Der Grundkörper 150 weist ferner eine Lagereinheit 152 auf, durch welche die Auffangeinrichtung 146 am Grundkörper 150 gelagert ist. Der Grundkörper 150 zusammen mit der Fördereinheit 22 und der Auffangeinrichtung 146 ist mittels des Fahrwerks 33 in die Transporteinheit 16 hinein und aus der Transporteinheit 16 heraus verfahrbar, wobei eine Bewegung des Grundkörpers 150 der Entladevorrichtung 20 die Fördereinheit 22 und die Auffangeinrichtung 146 gleichzeitig mitbewegt.

Die Auffangeinrichtung 146 ist zumindest in einer Arbeitsposition relativ zur Fördereinheit 22 derart angeordnet, dass der Auffangbereich 148 oberhalb der Förderebene 36 angeordnet ist. Falls ein aufgefangenes Stückgut 18 vom Auffangbereich 148 herunterfällt, kann hierdurch das Stückgut 18 direkt auf die Förderebene 36 gelangen, da diese direkt unterhalb des Auffangbereichs 148 angeordnet ist.

Ferner ist die Auffangeinrichtung 146 in zumindest zwei Bereichen geteilt. Wie oben beschrieben weist die Auffangeinrichtung 146 den Auffangbereich 148 auf, welcher vom oberen Ende bzw. von der oberen Kante der Auffangeinrichtung 146 gebildet ist und auf welchen ein herunterfallendes Stückgut 18 stößt, womit es seinen freien Fall unterbricht. An diesen Auffangbereich 148 schließt sich, insbesondere bündig, ein Führungsbereich 154 an, der dazu dient, ein aufgefangenes Stückgut 18 bis auf die Förderebene 36 zu führen. Im betrachteten Beispiel ist das Material der Auffangeinrichtung 146 derart gewählt, dass die Stückgüter 18 auf dem Führungsbereich 154 - durch ihre eigene Gewichtskraft angetrieben - gleiten. Insbesondere ist der Führungsbereich 154 von einer Rutsche gebildet.

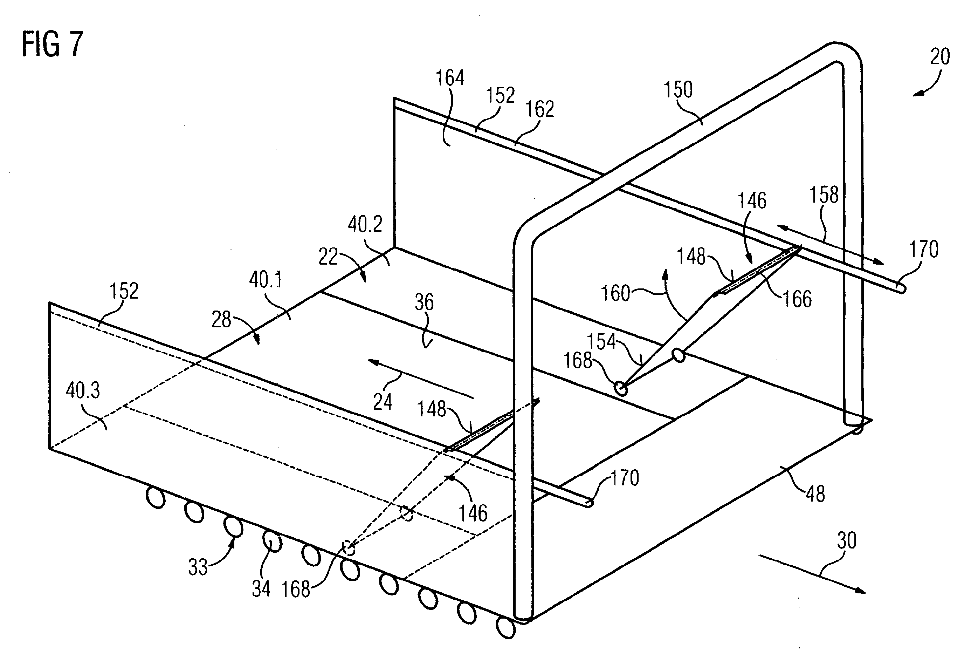

Der Auffangbereich 148 und der Führungsbereich 154 der Auffangeinrichtung 146 ist von einer Fläche gebildet, die relativ zur Förderebene 36 und in Entladerichtung 24 betrachtet nach unten geneigt ist. Die obere Kante der Fläche ist beim Entladevorgang dem zu behandelnden Stapel 38 zugewandt, während die untere Kante der Fläche im Bereich der Förderebene 36 angeordnet ist. Die Kanten sind jeweils parallel zueinander, horizontal und senkrecht zur Entladerichtung 24 ausgerichtet (siehe Figur 7).

Weitere Aspekte und Eigenschaften der Auffangeinrichtung 146 werden anhand der Figuren 7 bis 9 näher beschrieben.

Figur 7 zeigt die Entladevorrichtung 20 in einer perspektivischen Ansicht in einem aus der Transporteinheit 16 herausgefahrenen Zustand.

Die Entladevorrichtung 20 weist optional die Arbeitsplattform 48 auf, die dazu vorgesehen ist, von einer Bedienperson begangen zu werden. Bei einem Entladevorgang kann die Bedienperson auf der Arbeitsplattform 48 stehen und den vor sich stehenden Stückgutstapel 38 bearbeiten. Ferner wird auf die obigen Ausführungen bezüglich der Arbeitsplattform 48 verwiesen.

Wie durch die Pfeile 158 und 160 angedeutet ist die Auffangeinrichtung 146 relativ zur Fördereinheit 22 bzw. zum Grundkörper 150 beweglich gelagert. Sie weist hierbei zumindest zwei Freiheitsgraden auf.

Die Auffangeinrichtung 146 ist linear und parallel zur Entladerichtung 24 verschiebbar ausgebildet (Pfeil 158). Die Beweglichkeit der Auffangeinrichtung 146 ist durch die Lagereinheit 152 gegeben, die als Führungseinheit 162 eine Verschiebung der Lagerstelle der Auffangeinrichtung 146, an welcher diese am Grundkörper 150 gelagert ist, in Entladerichtung 24 und entgegen der Entladerichtung 24 zulässt. Die Führungseinheit 162 ist als eine sich in Entladerichtung 24 und daher horizontal erstreckende, an einer Seitenwand 164 des Grundkörpers 150 angebrachte Führungskulisse ausgebildet.

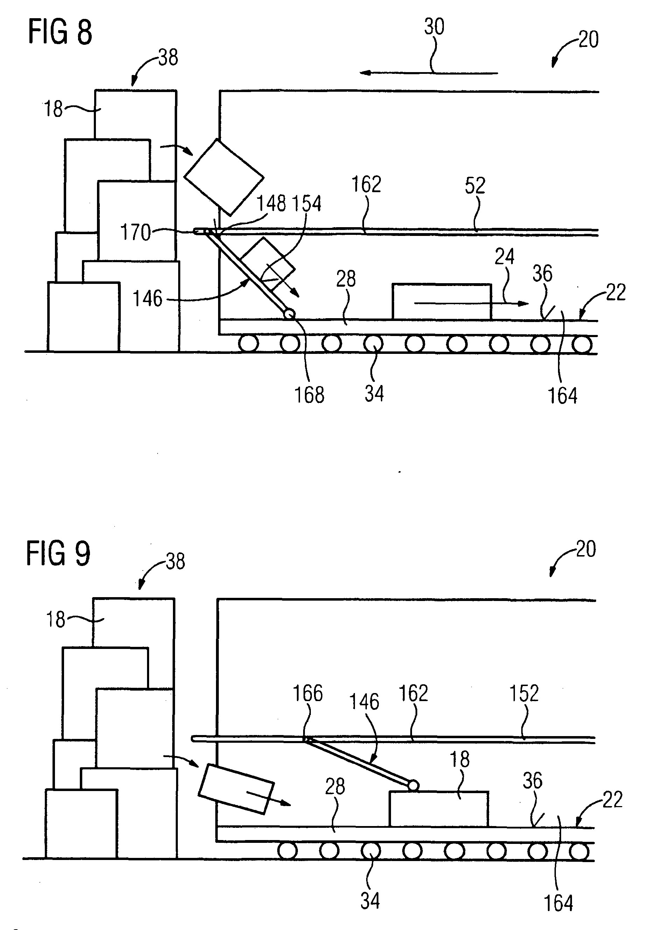

Ferner lässt die Lagereinheit 152 ein Schwenken der Auffangeinrichtung 146 um eine Drehachse 166 zu (Pfeil 160). Diese ist horizontal und senkrecht zur Entladerichtung 24 ausgerichtet. Beim Schwenken erfolgt eine Drehung der Auffangeinrichtung 146 um deren oberen Kante, die der Drehsachse 166 entspricht und in der Lagereinheit 152 bzw. Führungseinheit 162 in Entladerichtung 24 verschiebbar und drehbar gehaltert ist (siehe auch Figur 9) .

Der Grundkörper 150 weist zwei gegenüberliegende, vertikal und parallel zueinander und zur Entladerichtung 24 ausgerichtete Seitenwände 164 auf, die die Förderebene 36 seitlich begrenzen. Es ist an jeder Seitenwand 164 eine Lagereinheit 152 mit den oben beschriebenen Merkmalen angebracht, durch welche Auffangeinrichtungen 146 beidseitig der Entladevorrichtung 20 am Grundkörper 150 beweglich gelagert sind. Der Übersichtlichkeit halber wurde in Figur 6 auf die Darstellung einer Seitenwand 164 verzichtet.

An ihrem unteren Ende bzw. im Bereich ihrer unteren Kante sind die Auffangeinrichtungen 146 mit einem Fahrwerk in der Form einer Mehrzahl von als Rollkörper ausgebildeten Kontaktkörpern 168 versehen, durch welche sie in Kontakt mit der Förderebene 36 sind. In einer alternativen Ausführung können die Auffangeinrichtungen 146 die Förderebene 36 gleitend kontaktieren. Die Auffangeinrichtungen 146 sind über die Kontaktkörper 168 auf der Förderebene 36 durch ihre eigene Gewichtskraft lose abgestützt.

Die Figuren 8 und 9 zeigen einen Entladevorgang mittels der Entladevorrichtung 20 in einer stark schematisierten Seitenansicht und in zwei verschiedenen Arbeitsmodi. Wie in Figur 6 wurde der Klarheit halber auf die Darstellung einer der Seitenwände 164 verzichtet.

Figur 8 zeigt die Auffangeinrichtung 146 in einem Arbeitsmodus, wobei sie eine Arbeitsposition annimmt, in welcher sie sich auf der Förderebene 36, insbesondere mittels der Kontaktkörper 168, abstützt und sie mittels der Führungseinheit 162 an den Stückgutstapel 38 herangefahren wurde. Um den Auffangbereich 148 möglichst nah an den Stückgutstapel 38 heranzubewegen, weist die Führungseinheit 162 einen Vorsprung 170 auf, der sich ausgehend von der Seitenwand 164 in Einfahrrichtung 30 bzw. entgegen der Entladerichtung 24 erstreckt. Das Verschieben der Auffangeinrichtung 146, um diese an den Stückgutstapel 38 heranzuschieben, erfolgt durch die Bedienperson, welche sich auf der Entladevorrichtung 20 oder in Einfahrrichtung 30 betrachtet vor dieser auf dem Boden der Transporteinheit 16 aufhält. Die Bedienperson behandelt zunächst die Stückgüter 18, die sich im oberen Bereich des Stückgutstapels 38 befinden. Hierbei werden diese einfach nach unten gestürzt. Ein freier Fall dieser gestürzten Stückgüter 18 wird wie oben erläutert durch den Auffangbereich 148 unterbrochen und die Stückgüter 18 werden durch ihre eigene Gewichtskraft auf den Führungsbereich 154 umgeleitet, auf welchem sie gleiten, um auf die Förderebene 36 zu gelangen. Mittels des Bodenförderers 28 werden sie in Entladerichtung 24 aus der Transporteinheit 16 heraus gefördert.

Nach einem Abarbeiten der oberen Stapelschicht kann die Bedienperson die Auffangeinrichtung 146 in Entladerichtung 24 verschieben, um dadurch genügend Raum zur Behandlung der unteren Stapelschicht zu schaffen. Die Auffangeinrichtung 146 erreicht hiermit eine passive Position, die in Figur 9 dargestellt ist. Durch die lose Anordnung der Auffangeinrichtung 146 auf der Förderebene 36 und die drehbare Lagerung um ihre obere Kante an der Lagereinheit 152 wird sie durch ein Stückgut 18, das vom Bodenförderer 28 in Entladerichtung 24 gefördert wird, von unten nach oben geschwenkt. In einer derartigen passiven Position stellt die Auffangeinrichtung 146 keine Behinderung für den Materialfluss dar. Die Möglichkeit des Schwenkens der Auffangeinrichtung 146 ist von ihrer Position in Entladerichtung 24 unabhängig. Insbesondere kann die Auffangeinrichtung 24 in der Arbeitsposition der Figur 3 jederzeit nach oben geschwenkt werden. Dies ermöglicht eine abwechselnde Behandlung von Stückgütern 18 der oberen und unteren Stapelschicht.

Wenn die untere Stapelschicht von der Bedienperson abgearbeitet wurde, kann die Entladevorrichtung 20 in Einfahrrichtung 30 weiter gefahren werden, um die Entfernung zum Stückgutstapel 38 zu reduzieren und die Auffangeinrichtung 146 kann von der Bedienperson möglichst nah an den Stapel 38 herangeschoben werden.

## Patentansprüche

1. Vorrichtung zum Behandeln von Stückgütern (18) einer Transporteinheit (16), insbesondere eines Wechselbehälters, mit einer mobilen Fördereinheit (22), die zum Entladen der Transporteinheit (16) in dieselbe hinein gefahren wird, unter der Kontrolle einer Bedienperson (46) darin gestapelte Stückgüter (18) aufnimmt und diese aus der Transporteinheit (16) heraus in einer Entladerichtung (24) zur weiteren Verarbeitung fördert,
wobei die Fördereinheit (22) einen Bodenförderer (28) aufweist, der vom Stückgutstapel (38) gestürzte Stückgüter (18) in loser Anordnung fördert und der eine Förderebene (36) bildet, wobei
die Fördereinheit (22) eine Arbeitsplattform (48) aufweist,die dazu vorgesehen ist, von der Bedienperson (46) begangen zu werden, **dadurch gekennzeichnet, dass** die Arbeitsplattform mit der Förderebene (36) koplanar oder geringfügig höher als diese angeordnet ist.

2. Vorrichtung nach Anspruch 1,
**dadurch gekennzeichnet, dass** der Bodenförderer (28) eine Förderebene (36) bildet, die zumindest beim Entladevorgang relativ zum Boden der Transporteinheit (16) maximal in Fußhöhe der Bedienperson (46) angeordnet ist.

3. Vorrichtung nach Anspruch 1 oder 2,
**dadurch gekennzeichnet, dass** die Förderebene (36)derart dimensioniert ist, dass sie sich senkrecht zur Entladerichtung (24) um zumindest einen wesentlichen Teil der Breite (B) der als genormter Wechselbehälter ausgebildeten Transporteinheit (16) erstreckt.

4. Vorrichtung nach einem der vorhergehenden Ansprüchen,
**gekennzeichnet durch** eine Werkzeugeinheit (52), die dazu vorgesehen ist, von der Bedienperson (46) zu einem geführten Stürzen von Stückgütern (18) vom Stückgutsstapel (38) bedient zu werden.

5. Vorrichtung nach Anspruch 4,
**dadurch gekennzeichnet, dass** die Werkzeugeinheit (52) an der Fördereinheit (22) gehaltert ist.

6. Vorrichtung nach einem der oben genannten Ansprüche,
**dadurch gekennzeichnet, dass** die Fördereinheit (22) für einen Entladevorgang in einer Einfahrrichtung (30) in die Transporteinheit (16) hinein gefahren wird und die Arbeitsplattform (48) bezüglich der Einfahrrichtung (30) am frontseitigen Ende der Fördereinheit (22) angeordnet ist.

7. Vorrichtung nach einem der oben genannten Ansprüche,
**dadurch gekennzeichnet, dass** der Bodenförderer (28) eine Förderebene (36) bildet und sich die Arbeitsplattform (48) senkrecht zur Entladerichtung (24) um zumindest einen wesentlichen Teil der Breite der Förderebene (36) erstreckt.

8. Vorrichtung nach einem der vorhergehenden Ansprüche,
**dadurch gekennzeichnet, dass** der Bodenförderer (28) einen Satz von Fördermitteln (40.1 - 40.5) aufweist, wobei zumindest zwei Fördermittel (40.1, 40.4) jeweils eine unterschiedliche Förderrichtung aufweisen.

9. Vorrichtung nach einem der vorhergehenden Ansprüche.
**gekennzeichnet durch** eine Vereinzelungseinrichtung zum Vereinzeln der aus der Transporteinheit (16) entladenen Stückgüter (18), die mit der Fördereinheit (22) fördertechnisch verbunden ist.

10. Vorrichtung nach einem der vorhergehenden Ansprüche,
**dadurch gekennzeichnet, dass** die Fördereinheit (22) eine Dämpfungseinheit (58) aufweist, die dazu vorgesehen ist, ein Stürzen der Stückgüter (18) auf den Bodenförderer (28) zu dämpfen.

11. Vorrichtung nach einem der vorhergehenden Ansprüche,
**dadurch gekennzeichnet, dass** die Fördereinheit (22) eine Rutsche (60) aufweist, die dazu dient, vom Stückgutstapel (38) herunterfallende Stückgüter (18) auf den Bodenförderer (28) zu führen.

12. Vorrichtung nach einem der vorhergehenden Ansprüche,
**gekennzeichnet durch** eine Fördereinrichtung (32), die sich zur weiteren Förderung der aus der Transporteinheit (16) heraustransportieren Stückgüter (18) fördertechnisch an die Fördereinheit (22) anschließt und als teleskopische Einrichtung ausgebildet ist.

13. Vorrichtung nach einem der vorhergehenden Ansprüche,
**dadurch gekennzeichnet, dass**
die Fördereinheit (22) eine Bedienvorrichtung (59) aufweist, die zu einer Betätigung einer Bewegung zumindest des Bodenförderers (28) durch die Bedienperson (46) vorgesehen ist.

14. Entladevorrichtung zum Entladen einer Transporteinheit (16) zum Transport von Stückgütern (18), mit einer Fördereinheit (22), die zum Fördern der Stückgüter (18) in einer Entladerichtung (24) aus der Transporteinheit (16) heraus vorgesehen ist und zumindest eine Förderebene (36) aufweist, wobei die Fördereinheit (22) einen die Förderebene (36) bildenden Bodenförderer (28) aufweist, der von einem Stückgutstapel (38) gestürzte Stückgüter (18) in loser Anordnung fördert,
**gekennzeichnet durch**
zumindest eine Auffangeinrichtung (60, 146) zum Auffangen von Stückgütern (18), die wenigstens einen Auffangbereich (62, 148) aufweist, der höher als die Förderebene (36) angeordnet ist, wobei die Auffangeinrichtung (146) relativ zur Fördereinheit (22) beweglich gelagert und die Auffangeinrichtung um zumindest eine Drehachse (166) schwenkbar ist und derart drehbar gelagert ist, dass sie von einem geförderten Stückgut (18) bei dessen Vorbeifahren geschwenkt wird..

15. Entladevorrichtung nach Anspruch 14,
**dadurch gekennzeichnet, dass**
die Fördereinheit (22) als mobile Fördereinheit ausgebildet ist, die zu einem Entladevorgang in die Transporteinheit (16) hinein gefahren wird.

16. Entladevorrichtung nach einem der Ansprüche 14 bis 15,
**dadurch gekennzeichnet, dass**
die Fördereinheit (22) und die Auffangeinrichtung (60, 146) eine zusammenhängende Einheit bilden.

17. Entladevorrichtung nach einem der Ansprüche 14 bis 16,
**dadurch gekennzeichnet, dass**
der Auffangbereich (148) zumindest in einer Arbeitsposition der Auffangeinrichtung (146) oberhalb der Förderebene (36) angeordnet ist.

18. Entladevorrichtung nach einem der Ansprüche 14 bis 17,
**dadurch gekennzeichnet, dass**
die Auffangeinrichtung (60, 146) zumindest einen Führungsbereich (64, 154) aufweist, der dazu dient, aufgefangene Stückgüter (18) auf die Förderebene (36) zu führen.

19. Entladevörrichtung nach Anspruch 18,
**dadurch gekennzeichnet, dass**
der Führungsbereich (64, 154) zu einem Gleiten der aufgefangenen Stückgüter (18) vorgesehen ist.

20. Entladevorrichtung nach einem der Ansprüche14 bis 19,
**gekennzeichnet durch**
einen Grundkörper (150), an welchem die Fördereinheit (22) gelagert ist, wobei die Auffangeinrichtung (146) am Grundkörper (150) beweglich gelagert ist.

21. Entladevorrichtung nach Anspruch 19 oder 20,
**dadurch gekennzeichnet, dass**
Die Auffangeinrichtung (146) zumindest parallel zur Entladerichtung (24) verschiebbar ist.

22. Entladevorrichtung nach einem der Ansprüche 14 bis 21,
**gekennzeichnet durch**
eine Führungseinheit (162), die dazu vorgesehen ist, die Auffangeinrichtung (146) parallel zur Entladerichtung (24) zu führen.

23. Entladevorrichtung nach einem der Ansprüche 14 bis 22,
**dadurch gekennzeichnet, dass**
die Auffangeinrichtung (146) zumindest einen Kontaktkörper (168) aufweist, durch welchen die Auffangeinrichtung (146) in Kontakt mit der Förderebene (36) ist.

## Claims

1. Apparatus for handling articles (18) in a transporting unit (16), in particular an interchangeable container, having a mobile conveying unit (22) which is moved into the transporting unit (16) in order to unload the latter, picks up articles (18) stacked therein under the control of an operator (46) and conveys said articles (18) out of the transporting unit (16) in an unloading direction (24) for further processing,
the conveying unit (22) having a floor conveyor (28) which conveys in a loose arrangement the articles (18) that have been toppled from the stack (38) of articles and which forms a conveying plane (36), the conveying unit (22) having a working platform (48) which is provided to be walked on by the operator (46), **characterized in that** the working platform is arranged in a manner coplanar with the conveying plane (36) or slightly higher than the latter.

2. Apparatus according to Claim 1,
**characterized in that**
the floor conveyor (28) forms a conveying plane (36) which is arranged, at least during the unloading operation, at most at the level of the feet of the operator (46) in relation to the floor of the transporting unit (16).

3. Apparatus according to Claim 1 or 2,
**characterized in that**
the conveying plane (36) is dimensioned such that it extends perpendicularly to the unloading direction (24) over at least a substantial part of the width (B) of the transporting unit (16), which is configured as a standard interchangeable container.

4. Apparatus according to one of the preceding claims,
**characterized by**
a tool unit (52) which is provided to be operated by the operator (46) for the guided toppling of articles (18) from the stack (38) of articles.

5. Apparatus according to Claim 4,
**characterized in that**
the tool unit (52) is secured to the conveying unit (22).

6. Apparatus according to one of the above-mentioned claims,
**characterized in that**
the conveying unit (22) is moved in a moving-in direction (30) into the transporting unit (16) for an unloading operation and the working platform (48) is arranged at the front end of the conveying unit (22) with respect to the moving-in direction (30).

7. Apparatus according to one of the above-mentioned claims,
**characterized in that**
the floor conveyor (28) forms a conveying plane (36) and the working platform (48) extends perpendicularly to the unloading direction (24) over at least a substantial part of the width of the conveying plane (36).

8. Apparatus according to one of the preceding claims,
**characterized in that**
the floor conveyor (28) has a set of conveying means (40.1-40.5), wherein at least two conveying means (40.1, 40.4) each have a different conveying direction.

9. Apparatus according to one of the preceding claims,
**characterized by**
a separating device for separating articles (18) unloaded from the transporting unit (16), said separating device (62) being connected in conveying terms to the conveying unit (22).

10. Apparatus according to one of the preceding claims,
**characterized in that**
the conveying unit (22) has a cushioning unit (58) which is provided to cushion the toppling of the articles (18) onto the floor conveyor (28).

11. Apparatus according to one of the preceding claims,
**characterized in that**
the conveying unit (22) has a chute (60) which serves to guide articles (18) that drop down from the stack (38) of articles onto the floor conveyor (28).

12. Apparatus according to one of the preceding claims,
**characterized by**
a conveying device (32) which, in order to further convey the articles (18) that have been transported out of the transporting unit (16), adjoins the conveying unit (22) in conveying terms and is configured as a telescopic device.

13. Apparatus according to one of the preceding claims,
**characterized in that**
the conveying device (22) has an operating apparatus (59) which is provided so that the operator (46) can actuate a movement of at least the floor conveyor (28).

14. Unloading apparatus for unloading a transporting unit (16) for transporting articles (18), having a conveying unit (22) which is provided for conveying the articles (18) in an unloading direction (24) out of the transporting unit (16) and has at least one conveying plane (36), the conveying unit (22) having a floor conveyor (28) that forms the conveying plane (36) and conveys in a loose arrangement articles (18) that have been toppled from a stack (38) of articles,
**characterized by**
at least one collecting device (60, 146) for collecting articles (18), said collecting device (60, 146) having at least one collecting region (62, 148) which is arranged higher than the conveying plane (36), the collecting device (146) being mounted such that it is able to move in relation to the conveying unit (22) and the collecting device can be pivoted about at least one axis of rotation (166) and is mounted in a rotatable manner such that it is pivoted by a conveyed article (18) as the latter passes.

15. Unloading apparatus according to Claim 14,
**characterized in that**
the conveying unit (22) is configured as a mobile conveying unit which is moved into the transporting unit (16) for an unloading operation.

16. Unloading apparatus according to one of Claims 14 to 15,
**characterized in that**
the conveying unit (22) and the collecting device (60, 146) form a cohesive unit.

17. Unloading apparatus according to one of Claims 14 to 16,
**characterized in that**
the collecting region (148) is arranged above the conveying plane (36) at least in a working position of the collecting device (146).

18. Unloading apparatus according to one of Claims 14 to 17,
**characterized in that**
the collecting device (60, 146) has at least one guiding region (64, 154) which serves to guide collected articles (18) onto the conveying plane (36).

19. Unloading apparatus according to Claim 18,
**characterized in that**
the guiding region (64, 154) is provided for sliding of the collected articles (18).

20. Unloading apparatus according to one of Claims 14 to 19,
**characterized by**
a basic body (150) on which the conveying unit (22) is mounted, wherein the collecting device (146) is mounted on the basic body (150) such that it is able to move.

21. Unloading apparatus according to Claim 19 or 20,
**characterized in that**
the collecting device (146) can be displaced at least parallel to the unloading direction (24).

22. Unloading apparatus according to one of Claims 14 to 21,
**characterized by**
a guiding unit (162) which is provided to guide the collecting device (146) parallel to the unloading direction (24).

23. Unloading apparatus according to one of Claims 14 to 22,
**characterized in that**
the collecting device (146) has at least one contact body (168), by way of which the collecting device (146) is in contact with the conveying plane (36).

## Revendications

1. Dispositif de manipulation de colis ( 18 ) d'une unité ( 16 ) de transport, notamment d'un conteneur interchangeable, comprenant une unité ( 22 ) mobile de convoyage qui, pour décharger l'unité ( 16 ) de transport, est entré dans celle-ci, reçoit sous le contrôle d'une personne ( 46 ) de service des colis ( 18 ) qui y sont empilés et les sort de l'unité ( 16 ) de transport dans une direction ( 24 ) de déchargement vers un traitement ultérieur,
dans lequel l'unité ( 22 ) de convoyage a un convoyeur ( 28 ) de sol qui transporte, suivant un agencement en vrac, des colis ( 18 ) déchargés de la pile ( 38 ) de colis et qui forme un plan ( 36 ) de convoyage, dans lequel
l'unité ( 22 ) de convoyage à une plateforme ( 48 ) de travail qui est prévue pour être parcourue par la personne ( 46 ) de service, **caractérisé en ce que** la plateforme de travail est coplanaire avec le plan ( 36 ) de convoyage ou est disposé légèrement plus haut que celui-ci.

2. Dispositif suivant la revendication 1,
**caractérisé en ce que** le convoyeur ( 28 ) de sol forme un plan ( 36 ) de convoyage qui est disposé, au moins lors de l'opération de déchargement, relativement au fond de l'unité ( 16 ) de transport au maximum à hauteur de pied de la personne ( 46 ) de service.

3. Dispositif suivant la revendication 1 ou 2,
**caractérisé en ce que** le plan ( 36 ) de convoyage a des dimensions telles qu'il s'étend perpendiculairement à la direction ( 24 ) de déchargement sur au moins une partie essentielle de la largeur ( B ) de l'unité ( 16 ) de transport constituée sous la forme d'un conteneur interchangeable aux normes.

4. Dispositif suivant l'une des revendications précédentes,
**caractérisé en ce qu'**une unité ( 52 ) d'outil, qui est prévue pour être servie par la personne ( 46 ) de service en vue de décharger de manière guidée des colis ( 18 ) de la pile ( 38 ) de colis.

5. Dispositif suivant la revendication 4,
**caractérisé en ce que** l'unité ( 52 ) d'outil est maintenue sur l'unité ( 22 ) de convoyage.

6. Dispositif suivant l'une des revendications précédentes,
**caractérisé en ce que** l'unité ( 22 ) de convoyage est, pour une opération de déchargement, entrée suivant une direction ( 30 ) d'entrée dans l'unité ( 16 ) de transport et la plateforme ( 48 ) de travail est disposée, par rapport à la direction ( 30 ) d'entrée, à l'extrémité du côté avant de l'unité ( 22 ) de convoyage.

7. Dispositif suivant l'une des revendications précédentes,
**caractérisé en ce que** le convoyeur ( 28 ) de sol forme un plan ( 36 ) de convoyage et la plateforme ( 48 ) de travail s'étend perpendiculairement à la direction ( 24 ) de déchargement sur au moins une partie essentielle de la largeur du plan ( 36 ) de convoyage.

8. Dispositif suivant l'une des revendications précédentes,
**caractérisé en ce que** le convoyeur ( 28 ) de sol à un jeu de moyens ( 40.1 à 40.5 ) de convoyage, au moins deux moyens ( 40.1 à 40.4 ) de convoyage ayant respectivement une direction de convoyage différente.

9. Dispositif suivant l'une des revendications précédentes,
**caractérisé par** un dispositif d'individualisation pour individualiser les colis ( 18 ) déchargés de l'unité ( 16 ) de transport, dispositif d'individualisation qui est relié en technique de convoyage à l'unité ( 22 ) de convoyage.

10. Dispositif suivant l'une des revendications précédentes,
**caractérisé en ce que** l'unité ( 22 ) de convoyage a une unité ( 58 ) d'amortissement, qui est prévue pour amortir un déchargement des colis ( 18 ) sur le convoyeur ( 28 ) de sol.

11. Dispositif suivant l'une des revendications précédentes,
**caractérisé en ce que** l'unité ( 22 ) de convoyage a une glissière ( 60 ) qui sert à guider des colis ( 18 ) tombant de la pile ( 38 ) de colis sur le convoyeur ( 28 ) de sol.

12. Dispositif suivant l'une des revendications précédentes,
**caractérisé par** un dispositif ( 32 ) de convoyage qui, pour continuer à convoyer les colis ( 18 ) sorties de l'unité ( 16 ) de transport, se raccorde en technique de convoyage à l'unité ( 22 ) de convoyage et est constitué sous la forme d'un dispositif télescopique.

13. Dispositif suivant l'une des revendications précédentes,
**caractérisé en ce que** l'unité ( 22 ) de convoyage a un dispositif ( 59 ) de commande, qui est prévu pour que la personne ( 46 ) de service déplace au moins le convoyeur ( 28 ) de sol.

14. Dispositif de déchargement d'une unité ( 16 ) de transport de colis ( 18 ) comprenant une unité ( 12 ) de convoyage qui est prévue pour sortir les colis ( 18 ) dans une direction ( 24 ) de déchargement de l'unité ( 16 ) de transport et qui a au moins un plan ( 36 ) de convoyage, l'unité ( 22 ) de convoyage ayant un convoyeur ( 28 ) de sol formant le plan ( 36 ) de convoyage et convoyant suivant un agencement en vrac des colis ( 18 ) déchargés d'une pile ( 38 ) de colis,
**caractérisé par**
au moins un dispositif ( 60, 146 ) de capture de colis ( 18 ), qui a au moins une zone ( 62, 148 ) de capture qui est disposée plus haut que le plan ( 36 ) de convoyage, le dispositif ( 146 ) de capture étant monté mobile par rapport à l'unité ( 22 ) de convoyage et le dispositif de capture étant pivotant autour d'au moins un axe ( 166 ) de rotation et étant monté tournant de manière à être pivoté par un colis ( 18 ) convoyé lorsque celui-ci passe devant.

15. Dispositif de décharement suivant la revendication 14,
**caractérisé en ce que**
l'unité ( 22 ) de convoyage est constitué en unité de convoyage mobile qui, pour une opération de déchargement, entre dans l'unité ( 16 ) de transport.

16. Dispositif de déchargement suivant l'une des revendications 14 à 15,
**caractérisé en ce que**
l'unité ( 22 ) de convoyage et le dispositif ( 60, 146 ) de capture forment une unité d'un seul tenant.

17. Dispositif de déchargement suivant l'une des revendications 14 à 16,
**caractérisé en ce que**
la zone ( 148 ) de capture est disposée, au moins dans une position de travail du dispositif ( 146 ) de capture, au dessus du plan ( 36 ) de convoyage.

18. Dispositif de déchargement suivant l'une des revendications 14 à 17,
**caractérisé en ce que**
le dispositif ( 60, 146 ) de capture a au moins une zone ( 64, 154 ) de guidage, qui sert à guider des colis ( 18 ) capturés sur le plan ( 36 ) de convoyage.

19. Dispositif de déchargement suivant la revendication 18,
**caractérisé en ce que**
la zone ( 64, 154 ) de guidage est prévue pour un glissement des colis ( 18 ) capturés.

20. Dispositif de déchargement suivant l'une des revendications 14 à 19,
**caractérisé par** un corps ( 150 ) de base, sur lequel l'unité ( 22 ) de convoyage est montée, le dispositif ( 146 ) de capture étant monté mobile sur le corps ( 150 ) de base.

21. Dispositif de déchargement suivant la revendication 19 ou 20,
**caractérisé en ce que**
le dispositif ( 146 ) de capture peut coulisser au moins parallèlement à la direction ( 24 ) de déchargement.

22. Dispositif de déchargement suivant l'une des revendications 14 à 21,
**caractérisé par**
une unité ( 162 ) de guidage, qui est prévue pour guider le dispositif ( 146 ) de capture parallèlement à la direction ( 24 ) de déchargement.

23. Dispositif de déchargement suivant l'une des revendications 14 à 22,
**caractérisé en ce que**
le dispositif ( 146 ) de capture a au moins un corps ( 168 ) de contact, par lequel le dispositif ( 146 ) de capture est en contact avec le plan ( 36 ) de convoyage.
